# EUROPEAN PATENT APPLICATION

(11) **EP 4 648 489 A1**
(43) Date of publication of application: **12.11.2025**
(21) Application number: 23914086.6
(22) Date of filing: 06.01.2023
(51) Int. Cl.: H04W 52/02

(54) **RESOURCE DETERMINATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2023/071062
(87) International publication number: WO 2024/145929

(57) **Abstract**

The embodiments of the present application provide a resource determination method and apparatus, a terminal device, and a network device. The method includes: a terminal device determining a first resource according to a received first signal, where the first resource is used for receiving a second signal, and the second signal is used for waking up a main receiver of the terminal device.

## Description

### TECHNICAL FIELD

Embodiments of the present disclosure relate to the technical field of mobile communications, in particular to, methods and devices for determining a resource, a terminal device, and a network device.

### BACKGROUND

In practical applications, a terminal device may turn off a primary receiver, and use a secondary receiver with extremely low power consumption/low complexity to receive a wake up signal (WUS) for waking up the primary receiver, thereby reducing the power consumption of the terminal device. Typically, resources for the wake up signal are semi-statically configured. However, in the case of increasingly scarce wireless resources, such semi-static configuration manner limits the utilization rate of the wireless resources.

### SUMMARY

Embodiments of the present disclosure provide methods and devices for determining a resource, a terminal device, and a network device.

An embodiment of the present disclosure provides a method for determining a resource, which includes the following operation.

A terminal device determines a first resource based on a received first signal, where the first resource is used to receive a second signal, and the second signal is used to wake up a primary receiver of the terminal device.

An embodiment of the present disclosure provides a method for determining a resource, which includes the following operation.

A network device transmits a first signal, where the first signal is used to determine a first resource on which a terminal device receives a second signal, and the second signal is used to wake up a primary receiver of the terminal device.

An embodiment of the present disclosure further provides a device for determining a resource, which is applied to a terminal device and includes a determination unit.

The determination unit is configured to determine a first resource based on a received first signal, where the first resource is used to receive a second signal, and the second signal is used to wake up a primary receiver of the terminal device.

An embodiment of the present disclosure further provides a device for determining a resource, which is applied to a network device and includes a second transceiving unit.

The second transceiving unit is configured to transmit a first signal, where the first signal is used to determine a first resource on which a terminal device receives a second signal, and the second signal is used to wake up a primary receiver of the terminal device.

An embodiment of the present disclosure provides a communication device, which may be the terminal device or the network device in the foregoing schemes. The communication device includes a processor and a memory. The memory is configured to store a computer program, and the processor is configured to call and run the computer program stored in the memory to perform each of the methods for determining the resource described above.

An embodiment of the present disclosure provides a chip, which is configured to implement each of the methods for determining the resource described above.

Specifically, the chip includes a processor configured to call and run a computer program from a memory, to enable a device on which the chip is mounted to perform each of the methods for determining the resource described above.

An embodiment of the present disclosure provides a computer-readable storage medium. The computer-readable storage medium is configured to store a computer program that causes a computer to perform each of the methods for determining the resource described above.

An embodiment of the present disclosure provides a computer program product. The computer program product includes computer program instructions that cause a computer to perform each of the methods for determining the resource described above.

An embodiment of the present disclosure provides a computer program. When the computer program is run on the computer, a computer is caused to perform each of the methods for determining the resource described above.

In the method for determining the resource provided in the embodiments of the present disclosure, the terminal device determines the first resource based on the received first signal, where the first resource is used to receive the second signal, and the second signal is used to wake up the primary receiver of the terminal device. In other words, the terminal device may determine, based on the received first signal, the resource for the second signal that is used to wake up the primary receiver. In such way, the network device may notify, according to the actual usage of wireless resources, the first resource for receiving the second signal to the terminal device through the first signal. Accordingly, the terminal device may receive the first signal and determine the first resource for receiving the second signal, to further receive the second signal. As such, the flexibility of resource configuration for the second signal can be improved, and the utilization rate of the wireless resources can be also improved.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of a communication architecture according to an embodiment of the present disclosure.
FIG. 2 is a schematic diagram of a principle of an On-Off Keying (OOK) modulation according to an embodiment of the present disclosure.
FIG. 3 is a schematic diagram of a Multi-Carrier OOK (MC-OOK) signal according to an embodiment of the present disclosure.
FIG. 4 is a schematic diagram of 256 Quadrature Amplitude Modulation (256QAM) modulation constellation points according to an embodiment of the present disclosure.
FIG. 5 is a schematic structural diagram of a receiver system of a terminal device according to an embodiment of the present disclosure.
FIG. 6 is a first flowchart of a method for determining a resource according to an embodiment of the present disclosure.
FIG. 7 is a schematic diagram of states of a terminal device according to an embodiment of the present disclosure.
FIG. 8 is a schematic diagram of a principle of generating a first signal through multi-carrier modulation according to an embodiment of the present disclosure.
FIG. 9 is a schematic diagram of a wake up signal (WUS) according to an embodiment of the present disclosure.
FIG. 10 is a schematic diagram of transmission of a WUS according to an embodiment of the present disclosure.
FIG. 11 is a schematic diagram of a frequency-domain raster according to an embodiment of the present disclosure.
FIG. 12 is a schematic diagram of a correspondence relationship between a first signal and a first resource according to an embodiment of the present disclosure.
FIG. 13 is a second flowchart of a method for determining a resource according to an embodiment of the present disclosure.
FIG. 14 is a schematic structural diagram of a device for determining a resource 1400 according to an embodiment of the present disclosure.
FIG. 15 is a schematic structural diagram of a device for determining a resource 1500 according to an embodiment of the present disclosure.
FIG. 16 is a schematic structural diagram of a communication device according to an embodiment of the present disclosure.
FIG. 17 is a schematic structural diagram of a chip according to an embodiment of the present disclosure.
FIG. 18 is a schematic block diagram of a communication system according to an embodiment of the present disclosure.

### DETAILED DESCRIPTION

The technical solutions in the embodiments of the present disclosure will be described below in combination with the accompanying drawings in the embodiments of the present disclosure. It is apparent that the described embodiments are partial embodiments of the present disclosure but not all of the embodiments. Based on the embodiments in the present disclosure, all other embodiments obtained by those of ordinary skill in the art without creative work shall fall within the scope of protection of the present disclosure.

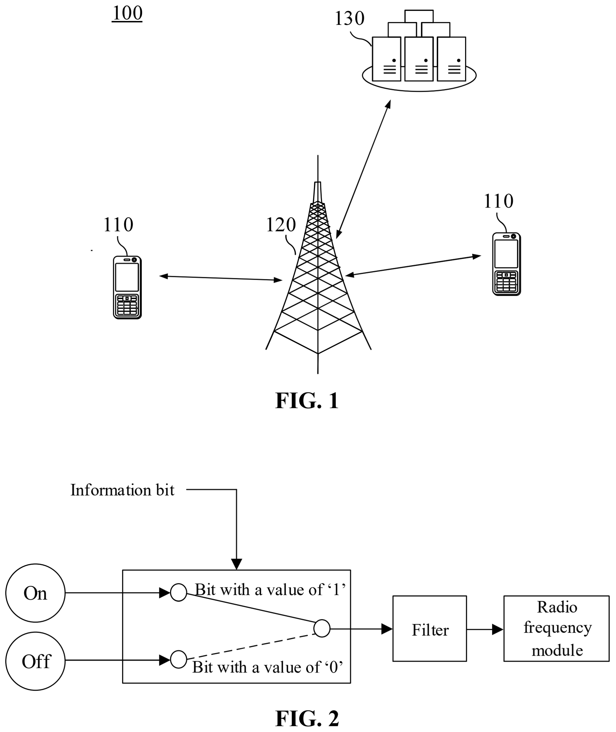

FIG. 1 is a schematic diagram of an application scenario to which an embodiment of the present disclosure is applied.

As illustrated in FIG. 1, a communication system 100 may include a terminal device 110 and a network device 120. The network device 120 may communicate with the terminal device 110 through an air interface. Multi-service transmission between the terminal device 110 and the network device 120 is supported.

It should be understood that the embodiments of the present disclosure are illustrated with reference to the communication system 100 only, but are not limited thereto. In other words, the technical solutions of the embodiments of the present disclosure may be applied to various communication systems, such as a long term evolution (LTE) system, an LTE time division duplex (TDD), a universal mobile telecommunication system (UMTS), an Internet of things (IoT) system, a narrow band Internet of things (NB-IoT) system, an enhanced machine-type communications (eMTC) system, a 5-th generation (5G) communication system (also referred to as a new radio (NR) communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., a User Equipment (UE)) in the coverage.

The network device 120 may be an evolutional node B (eNB or eNodeB) in an LTE system, a next generation radio access network (NG RAN) device, a base station (gNB) in an NR system, or a wireless controller in a cloud radio access network (CRAN). The network device may further be a relay station, an access point, a vehicle-mounted device, a wearable device, a hub, a switch, a network bridge, a router, a network device in a future evolved public land mobile network (PLMN) or the like.

The terminal device 110 may be any terminal device, which includes, but not limited to, a terminal device that has a wired or wireless connection to the network device 120 or other terminal devices.

As an example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to device to device (D2D) communication.

The wireless communication system 100 may further include a core network device 130 that communicates with the network deice 120. The core network device 130 may be a 5G core (5GC) device, such as an access and mobility management function (AMF), an authentication server function (AUSF), a user plane function (UPF), or a session management function (SMF). Optionally, the core network device 130 may also be an evolved packet core (EPC) device in the LTE network, for example, a session management function + core packet gateway (SMF+PGW-C) device. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a next generation (NG) interface, to realize communication.

For example, the terminal device may establish an air interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may interact the user plane data with a data network through an NG interface 6 (abbreviated as N6). The AMF may establish a control plane signaling connection with the SMF through an NG interface 11 (abbreviated as N11). The SMF may establish a control plane signaling connection with a policy control function (PCF) through an NG interface 7 (abbreviated as N7).

One network device, one core network device and two terminal devices are exemplarily shown in FIG. 1. Optionally, the wireless communication system 100 may include multiple network devices, and another number of terminal devices may be included in the coverage of each network device, which is not limited in the embodiments of the present disclosure.

It should be noted that FIG. 1 only illustrates the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" herein only is used to indicate an association relationship for describing the associated objects, and represents that three kinds of relationships may exist. For example, "A and/or B" may represent three conditions, i.e., independent existence of A, existence of both A and B, and independent existence of B. In addition, the character "/" herein usually represents that the previous and next associated objects form an "or" relationship. It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be obtained through A. It may further mean that A indirectly indicates B, e.g., A indicates C, and B may be obtained through C. It may further mean that there is an association between A and B. It should also be understood that the term "corresponding" referred to in the embodiments of the present disclosure may represent that there is a direct correspondence or an indirect correspondence between the two objects, or may further represent that there is an association relationship between the two objects, a relationship between the indication and the object to be indicated, or a relationship between the configuration and the object to be configured, etc. It should also be understood that the phrase "predefined" or "predefined rules" referred to in the embodiments of the present disclosure may be implemented by pre-storing corresponding codes, tables, or by other means that may be used to indicate relevant information in devices (such as terminal devices and network devices). The specific implementations of which are not limited in the present disclosure. For example, the "predefined" may refer to what is defined in a protocol. It should also be understood that the "protocol" in the embodiments of the present disclosure may be a standard protocol in the communication field, such as an LTE protocol, an NR protocol, and related protocols applied in future communication systems, which is not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

In order to further reduce the power consumption of the terminal device, the Standard Discussion Version 18 (R18) considers introducing a secondary receiver for the terminal device. The secondary receiver has characteristics of extremely low cost, low complexity and low power consumption. The secondary receiver mainly receives signals through envelope detection or amplitude detection.

The signal(s) received by the secondary receiver may differ from the signal(s) carried based on the Physical Downlink Control Channel (PDCCH) defined in R16 and R17 in terms of the modulation scheme(s), waveform(s), etc. The secondary receiver is capable of receiving signals with relatively low demodulation complexity. Exemplarily, the secondary receiver may receive: an envelope signal that is obtained by performing Amplitude Shift Keying (ASK) modulation on a carrier signal, a signal that is obtained by performing Phase Shift Keying (PSK) modulation on the carrier signal, a signal that is obtained by performing Frequency Shift Keying (FSK) modulation on the carrier signal, and the like.

Herein, the demodulation for the signal through the ASK modulation may be completed by driving a low-power-consumption circuit based on an energy provided by a wireless radio frequency signal. Therefore, the secondary receiver may be a passive receiver. Furthermore, the secondary receiver may also be powered by the terminal device. Regardless of the power supply manner, the power consumption of the secondary receiver is significantly reduced compared with the power consumption of a traditional receiver in the terminal device.

In some embodiments, the secondary receiver may receive a signal through On-Off Keying (OOK) modulation. With reference to a schematic diagram of a principle of OOK modulation shown in FIG. 2, the OOK is referred to as binary Amplitude Shift Keying (2ASK). The OOK modulation may modulate the amplitude of the carrier to be a non-zero value and a zero value, which respectively correspond to On and Off. When the amplitude of the carrier is modulated to be the non-zero value (corresponding to the On component in the OOK), it represents a bit with a value of 1 among information bits. When the amplitude value of the carrier is modulated to be the zero value (corresponding to the Off component in the OOK), it represents a bit with a value of 0 among the information bits. Further, after modulation, the information bits may be converted into an analog signal; then, the analog signal may be filtered by a filter and further sent out through a radio frequency module.

Currently, a multi-carrier modulation system is adopted in all transmitters. To maintain a good compatibility with the existing multi-carrier modulation system as well as reduce the complexity introduced due to the implementation of the wake up signal by the transmitter, an OOK signal may be simulated and generated by the existing multi-carrier modulation system, i.e., a Multi-Carrier OOK (MC-OOK) signal may be generated.

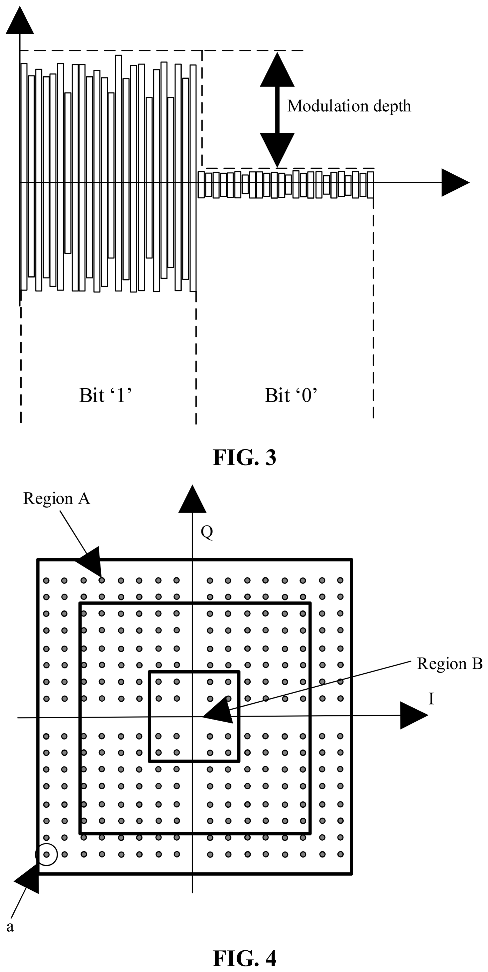

With reference to a schematic diagram of an MC-OOK signal shown in FIG. 3, in the multi-carrier modulation system (e.g., an Orthogonal Frequency Division Multiplexing (OFDM) modulation system), an existing OFDM transmitter may modulate each subcarrier to be with a specified amplitude and specified phase, so that a waveform of a time-domain signal obtained after an Inverse Discrete Fourier Transform (IDFT) conversion can approximate a waveform formed by the OOK modulation. Herein, the bit of 1 is represented by a high level of the signal, and the bit of 0 is represented by a low level of the signal.

Herein, for the generated MC-OOK signal, the amplitudes of the On component and the Off component are required to be clearly differentiated, to achieve a certain modulation depth for proper demodulation at a receiving end. For example, for an MC-OOK signal in the Wireless Fidelity (WiFi) technology, a ratio of an average power of the On component to that of the Off component is required to be at least 20 dB.

Based on this, when the On component of the OOK signal is generated at the transmitting end, the amplitude of the time-domain signal corresponding to the modulated subcarrier that carries the On component may satisfy the requirement of the modulation depth, and the amplitude of the time-domain signal may be as flat as possible. Accordingly, when the Off component is generated, the amplitude value of the time-domain signal corresponding to the modulated subcarrier that carries the Off component may be lower than the amplitude value of the On component, to satisfy the requirement of the modulation depth. Taking 256 Quadrature Amplitude Modulation (256QAM) as an example, the transmitter may map different constellation points onto the subcarriers to satisfy the foregoing requirements.

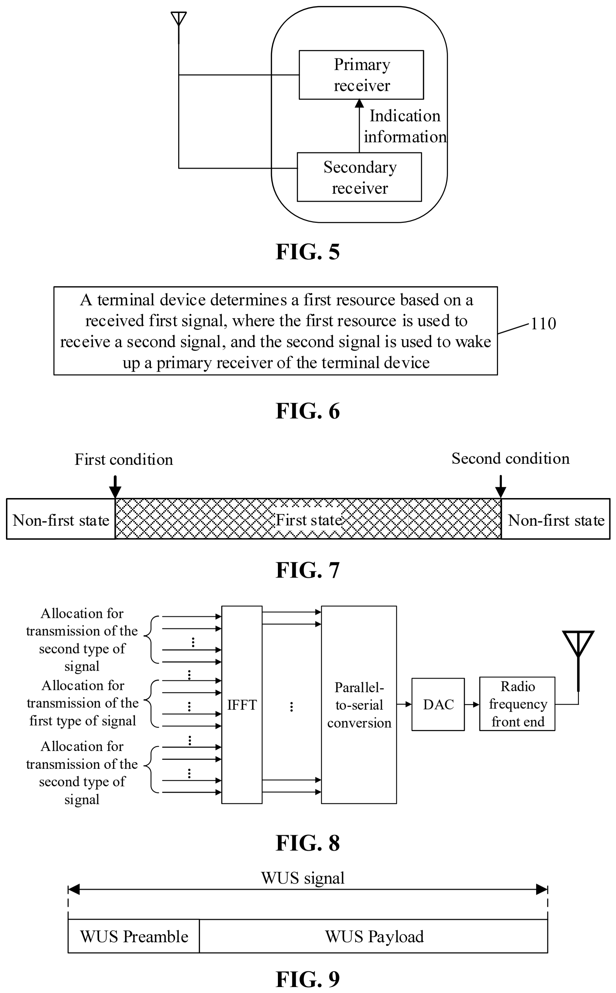

With reference to FIG. 4, the transmitter may map constellation points with large amplitude values (e.g., constellation points within the region A in FIG. 5) onto the subcarriers to generate the On component of the OOK signal, and map constellation points with small amplitude values (e.g., constellation points within the region B in FIG. 5) onto the subcarriers to generate the Off component of the OOK signal. In addition, the Off component may be implemented by setting the corresponding subcarrier as a null subcarrier. In other words, at the symbols where the Off component is located, the modulation symbols mapped to the corresponding subcarriers are only required to ensure that the time-domain waveforms of the modulation symbols satisfy the low level, and even the modulation symbols are not mapped onto such carriers.

With reference to the schematic structural diagram of the receiver system of the terminal device shown in FIG. 5, the primary receiver and the secondary receiver in the terminal device may share a set of radio frequency antennas. Under certain conditions, the terminal device may turn off the primary receiver, and receive the signals with low demodulation complexity through the secondary receiver, to implement communication with the network. If the network device requires the terminal device to turn on the primary receiver, indication information may be transmitted by the network device to the secondary receiver through the aforementioned signal, to indicate the terminal device to turn on the primary receiver. Specifically, after receiving the indication information for turning on the primary receiver, the secondary receiver may transmit wake up information to the primary receiver, which indicates to turn on the primary receiver.

Exemplarily, the secondary receiver may be a Wake Up Receiver (WUR). Herein, the WUR may receive a Wake Up Signal (WUS). The WUS may be used to wake up the primary receiver in the terminal device. If the WUS indicates the terminal device to turn on the primary receiver, the secondary receiver may transmit wake up information to the primary receiver, which indicates to turn on the primary receiver. Otherwise, the primary receiver may be in the off state.

It is to be understood that, due to the extremely low power consumption of the secondary receiver, the secondary receiver may be not necessary to be turned on and turned off for saving power as the primary receiver, but the secondary receiver may continuously keep the on state to receive the WUS. A resource position for the WUS may be pre-configured by the network device to the terminal device, but such semi-static resource configuration manner is not flexible for the usage of the wireless resources in the network, which limits the utilization rate of the wireless resources in the network to a certain extent.

Based on the above problem, in the method for determining the resource provided in the embodiments of the present disclosure, the terminal device determines the first resource based on the received first signal, where the first resource is used to receive the second signal, and the second signal is used to wake up the primary receiver of the terminal device. In other words, the terminal device may determine, based on the received first signal, the resource for the second signal that is used to wake up the primary receiver. In such way, the network device may notify, according to the actual usage of wireless resources, the first resource for receiving the second signal to the terminal device through the first signal. Accordingly, the terminal device may receive the first signal and determine the first resource for receiving the second signal, to further receive the second signal. As such, the flexibility of resource configuration for the second signal can be improved, and the utilization rate of the wireless resources can be also improved.

For convenience of understanding the technical solutions of the embodiments of the present disclosure, the technical solutions in the present disclosure are described below through the detailed embodiments. The above related technologies, used as optional solutions, may be combined with the technical solutions of the embodiments of the present disclosure in various ways, and the combinations shall fall within the scope of the protection of the embodiments of the present disclosure. The embodiments of the present disclosure include at least part of the following contents.

An embodiment of the present disclosure provides a method for determining a resource, and the method may be applied to the terminal device mentioned in the foregoing embodiments. With reference to FIG. 5, the terminal device in the embodiment of the present disclosure may include a primary receiver and a secondary receiver.

With reference to FIG. 6, the method for determining the resource according to the embodiment of the present disclosure includes an operation 110.

At block 110, a terminal device determines a first resource based on a received first signal, where the first resource is used to receive a second signal, and the second signal is used to wake up a primary receiver of the terminal device.

In an embodiment of the present disclosure, the second signal may be a signal received through the secondary receiver (e.g., the wake up receiver in the aforementioned embodiments) with extremely low power consumption and low complexity. Additionally, the waveform used by the second signal may be convenient to be detected by the secondary receiver, such as, an ASK signal, FSK signal, OOK signal, PSK signal, etc.

Furthermore, from a functionality perspective, the second signal may be a signal that can be used to wake up the primary receiver of the terminal device, such as the Wake Up Signal (WUS), an energy-saving signal, a paging signal, or the like. Herein, the WUS may be the same as or different from the energy-saving signal, which is not limited in the embodiments of the present disclosure.

It is to be understood that the primary receiver of the terminal device may be mainly used for the reception of LTE signals and/or LTE channels, NR signals and/or NR channels, and WiFi signals and/or WiFi channels. In order to save the power consumption of the terminal device, the terminal device may turn off the primary receiver and only turn on the secondary receiver to save the power when there is no data reception. Before the primary receiver is turned off, the terminal device is required to determine the reception resource for the second signal (i.e., the resource for receiving the second signal), thereby searching for the second signal through the secondary receiver.

In practical applications, due to the low complexity of the secondary receiver, it is difficult for the secondary receiver with the low complexity to search for the second signal through the secondary receiver. For example, the secondary receiver may be required to be tuned to different bandwidths to detect the second signal. In addition, since the second signal is not transmitted all the time, the directing search for the second signal by the terminal device may cause the problem of excessive time delay.

In order to realize the flexible usage of the resources for the second signal, the network device may not fixedly configure the terminal device with the position of the first resource for the second signal, but configure the terminal device to determine the first resource for receiving the second signal by searching. In the embodiments of the present disclosure, the terminal device may search for and receive the first signal, and further determine, according to the first signal, the first resource for receiving the second signal.

Optionally, after determining the first resource, the terminal device may receive the second signal on the first resource through the secondary receiver. As such, the terminal device may wake up the primary receiver based on the second signal.

It is to be understood that the network device may indicate, according to the actual usage of wireless resources, the resource for receiving the second signal to the terminal device through the first signal. Accordingly, the terminal device may receive the first signal and determine the resource for receiving the second signal, to further receive the second signal. In such way, the network device can flexibly adjust the transmission resources for the second signal without allocating fixed transmission resources for the second signal, thereby improving the flexibility of resource configuration for the second signal and further improving the utilization rate of the wireless resources. Moreover, according to the received first signal, the terminal device can directly determine the first resource for receiving the second signal without searching for the second signal, thereby reducing the complexity and time delay of the search performed by the terminal device.

Optionally, in an embodiment of the present disclosure, the terminal device may receive the first signal through the primary receiver, receive the first signal through the secondary receiver, or receive the first signal through both the primary receiver and the secondary receiver, which is not limited in the embodiments of the present disclosure.

It is to be understood that, in a case where the primary receiver of the terminal device is turned on, the terminal device may receive the first signal through the primary receiver, or receive the first signal through both the primary receiver and the secondary receiver. In a case where the primary receiver of the terminal device is turned off, the terminal device may receive the first signal through only the secondary receiver.

In some embodiments, with reference to FIG. 7, the terminal device may be configured with a first state and a non-first state. In the first state, the terminal device may turn off the primary receiver, and receive the signal through only the secondary receiver. In the non-first state, the terminal device may turn on the primary receiver, and receive the signal through the primary receiver, or through both the primary receiver and the secondary receiver.

Herein, the terminal device may perform a switching between the first state and the non-first state. Exemplarily, with reference to FIG. 7, when a first condition is satisfied, the terminal device may switch from the non-first state to the first state; and when a second condition is satisfied, the terminal device may switch from the first state to the non-first state. Herein, the first condition may include that the network device indicates to turn off the primary receiver through downlink signaling, or the network device does not schedule uplink transmission or downlink transmission for the current terminal device for a preset duration. The second condition may include that the terminal device indicates to exit the first state through uplink signaling, or the network device indicates to turn on the primary receiver through downlink signaling.

Optionally, the first state may be a WUS ON state, and the second state may be a WUS OFF state.

In an embodiment of the present disclosure, before entering the first state, the terminal device may receive the first signal through the primary receiver, or receive the first signal through both the primary receiver and the secondary receiver. Optionally, when the terminal device is in the first state, the terminal device may receive the first signal through the secondary receiver.

In summary, the terminal device may select a suitable receiver to search for and receive the first signal, so that the terminal device may be able to determine, according to the received first signal, the first resource for receiving the second signal in any scenario. As such, the flexibility of receiving the first signal can be improved, and the proper reception of the first signal can be ensured.

Optionally, the first signal may be a first type of signal or a second type of signal. Herein, the first type of signal may be a signal received based on one or more of the following manners: envelope detection, amplitude detection, frequency detection, and phase detection. The second type of signal may be one or more of: an NR signal, an LTE wireless signal, and a WiFi signal.

It is to be noted that the first type of signal may be the signal modulated in the modulation manner such as the ASK modulation, OOK modulation, FSK modulation or PSK modulation; and the second type of signal may be the signal modulated in a modulation manner such as multicarrier modulation or OFDM modulation. In addition, the waveform of the first type of signal may be the waveform formed by the ASK modulation, OOK modulation, FSK modulation, PSK modulation, and the like. The waveform of the second type of signal may be the waveform formed by the OFDM modulation or multi-carrier modulation.

Exemplarily, the first type of signal may be a Wake Up Radio (WUR) signal. The WUR signal may be a new radio air interface signal that is differentiated from the existing wireless air interface signal, such as the NR signal, LTE signal, and WiFi signal, and the like.

It is to be noted that the WUR signal may be generated in the modulation manner such as the ASK modulation, OOK modulation, FSK modulation, PSK modulation, and the like. The WUR signal may be further generated by an independent transmitter or a multi-carrier modulation-based transmitter. The manner for generating the WUR signal is not limited in the embodiments of the present disclosure.

It is to be understood that the first type of signal obtained through the modulation manner such as the ASK modulation, OOK modulation, FSK modulation and PSK modulation, may be received through the secondary receiver with low complexity and low power consumption. For the second type of signal obtained through the modulation manner such as the OFDM modulation and the multi-carrier modulation, the receiver may be required to detect the modulation symbol(s) on each subcarrier; and thus, the second type of signal may be required to be received through the primary receiver with high complexity and high power consumption.

It should to be noted that the primary receiver may also receive the first type of signal obtained through the modulation manner such as the ASK modulation, OOK modulation, FSK modulation, PSK modulation. FIG. 8 illustrates a schematic diagram of a principle of generating a first type of signal through multi-carrier modulation. The first type of signal may be multiplexed in band with the second type of signal (e.g., the NR signal) in the system. Specifically, the transmitter may map the first signal and other air interface signals onto different subcarriers, convert the frequency-domain signal(s) into the time-domain signal(s) through Inverse Fast Fourier Transform (IFFT), and then perform parallel-to-serial conversion processing and Digital-to-Analog Converter (DAC) processing. Finally, at the radio frequency front end, the transmitter may transmit the first type of signal and the second type of signal through the antenna(s). As such, the generation of the first type of signal can be implemented in the multi-carrier modulation system. In practical applications, the network device may obtain the first type of signal in the manner shown in FIG. 8, and further transmit the first type of signal to the terminal device. Accordingly, the terminal device may receive the first type of signal by performing the envelope detection, amplitude detection, frequency detection or phase detection through the primary receiver and/or the secondary receiver.

It is to be understood that the first type of signal may be received through the primary receiver and/or the secondary receiver, and the second type of signal may be received through the primary receiver. That is, when the first signal is the first type of signal, the terminal device may receive the first signal through the primary receiver and/or the secondary receiver. When the first signal is the second type of signal, the terminal device may receive the first signal through the primary receiver.

Optionally, the first signal may include at least one of the following of the first type of signal:
a first synchronization signal, a first reference signal, a first preamble signal, a first beacon signal, a first discovery signal, or a first index signal.

It is to be noted that the first type of signal, as a new air interface signal, may include: a first synchronization signal for time synchronization between the terminal device and the network device; a first reference signal for operations such as channel estimation, measurement of channel quality, positioning, phase tracking; a first preamble signal for access of the terminal device; a first beacon signal for identifying a transmitting end; and a first discovery signal and/or first index signal for determining a resource position.

Herein, the first synchronization signal, the first reference signal, the first preamble signal, the first beacon signal, the first discovery signal and the first index signal above may be transmitted periodically.

In the embodiments of the present disclosure, the first signal may be one or more of the following of the first type of signal: the first synchronization signal, the first reference signal, the first preamble signal, the first beacon signal, the first discovery signal and the first index signal. In other words, the terminal device may determine the first resource for receiving the second signal by searching for one or more of the following through the primary receiver and/or the secondary receiver: the first synchronization signal, the first reference signal, the first preamble signal, the first beacon signal, the first discovery signal, and the first index signal.

Exemplarily, the first synchronization signal may be a WUR synchronization signal, the first reference signal may be a WUR reference signal, the first beacon signal may be a WUR beacon signal, the first discovery signal may be a WUR discovery signal, and the first index signal may be a WUR index signal.

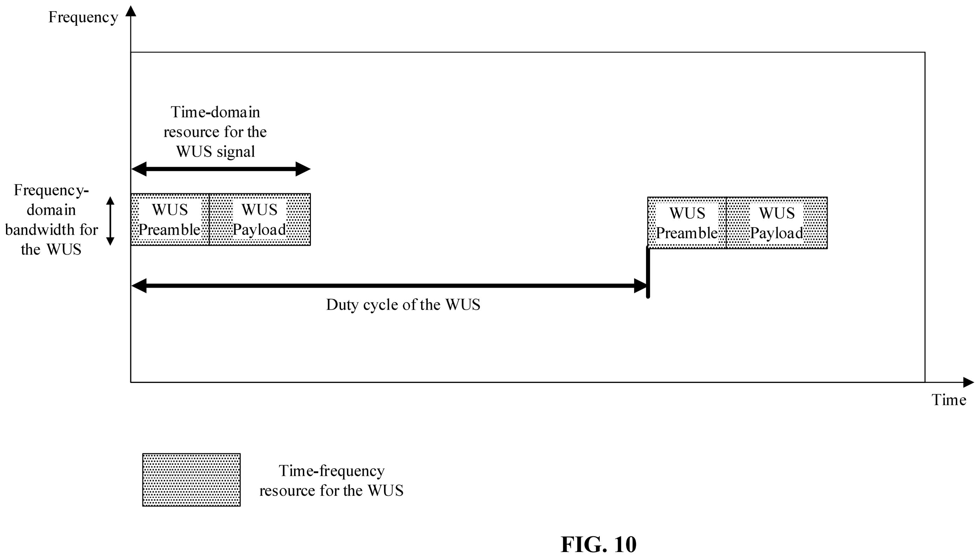

Exemplarily, the first preamble signal may be a preamble signal included in the WUS. The preamble signal is used to identify the WUS or to perform a synchronization operation before the reception of the WUS. With reference to FIG. 9, the WUS may include a WUS preamble portion and a WUS payload portion. Here, in a case where the payload is not included in the WUS, the WUS may be periodically transmitted. With reference to FIG. 10, the transmission cycle of the WUS is a duty cycle. The terminal device may search for the WUS preamble signal through the primary receiver and/or the secondary receiver, and further determine the first resource for receiving the WUS.

Optionally, the first signal may also include at least one of the following of the second type of signal:
a second synchronization signal, a second reference signal, a second preamble signal, a second beacon signal, a second discovery signal, or a second index signal.

It is to be understood that the second type of signal may be an NR signal, an LTE signal, or a WiFi signal. That is, the first signal may be signals having different functions, such as a synchronization signal, a reference signal, a preamble signal, a beacon signal, a discovery signal and an index signal in the NR signal, the LTE signal or the WiFi signal.

Exemplarily, the first signal may be a synchronization signal in NR, LTE or WiFi, such as a synchronization signal and Physical Broadcast Channel (PBCH) block (SSB) in NR, a primary synchronization signal and a secondary synchronization signal in LTE, etc., which is not limited in the embodiments of the present disclosure. The first signal may also be a reference signal in NR, LTE or WiFi, such as a Cell-specific Reference Signal (CRS), a positioning reference signal, a phase tracking reference signal, etc., which is not limited in the embodiments of the present disclosure. The preamble signal may include a preamble signal in NR, LTE or WiFi used for an access between the terminal device and the network device, or an access between the terminal device and an access point/router. The first signal may also be a beacon signal, a discovery signal, an index signal, etc., in NR, LTE or WiFi.

In summary, the first signal may be set to be different types of signals, so that the terminal device may search for the first signal in different scenarios, so as to determine, according to the first signal, the first resource for receiving the second signal.

The following describes in detail the manner in which the terminal device searches for the first signal.

In an embodiment of the present disclosure, the terminal device may detect the first signal on a second resource.

Herein, the second resource may be one or more of the following: a time-domain resource, a frequency-domain resource, and a code-domain resource, which is not limited in the embodiments of the present disclosure.

It is to be noted that there may be one or more the second resources, which is not limited in the embodiments of the present disclosure.

Herein, the network device may transmit the first signal on the second resource. Accordingly, the terminal device may detect the first signal on the second resource, to determine, according to the detected first signal, the first resource for receiving the second signal. That is, the second resource may be used for the terminal device to detect the first signal.

It is to be noted that the second resource may be a resource in a specific resource set, for example, the second resource may be a part or all of resources in the specific resource set, which is not limited in the embodiments of the present disclosure. The specific resource set may be predefined in a protocol or configured by a network.

It is to be understood that the first signal may a multiplex signal with a special function in the network, i.e., the signal such as the synchronization signal, the reference signal, the preamble signal, the beacon signal, the discovery signal, the index signals and the like, which has already existed in the network. The network device does not need to separately configure the second resource for detecting the first signal. Thus, the utilization rate of the wireless resources in the network can be further improved.

Optionally, the second resource for detecting the first signal may be determined based on one or more of the following: a preset rule, a network configuration, and a protocol predefinition.

In a possible implementation, the second resource for detecting the first signal may be configured by the network device.

Optionally, the network device may configure the second resource for the terminal device through high-level signaling. For example, the second resource may be configured through Radio Resource Control (RRC) signaling or Medium Access Control (MAC) Control Element (CE). In addition, the network device may further configure the second resource for the terminal device through physical layer signaling. For example, the second resource may be configured through Downlink Control Information (DCI).

It is to be noted that the network device may directly configure the terminal device with the second resource for detecting the first signal. Additionally, the network device may configure a specific resource set, and further indicate to the terminal device that a part of the resources in the specific resource set is the second resource for detecting the first signal. The configuration manner for the second resource is not limited in the embodiments of the present disclosure.

In another possible implementation, the second resource may be predefined in the protocol.

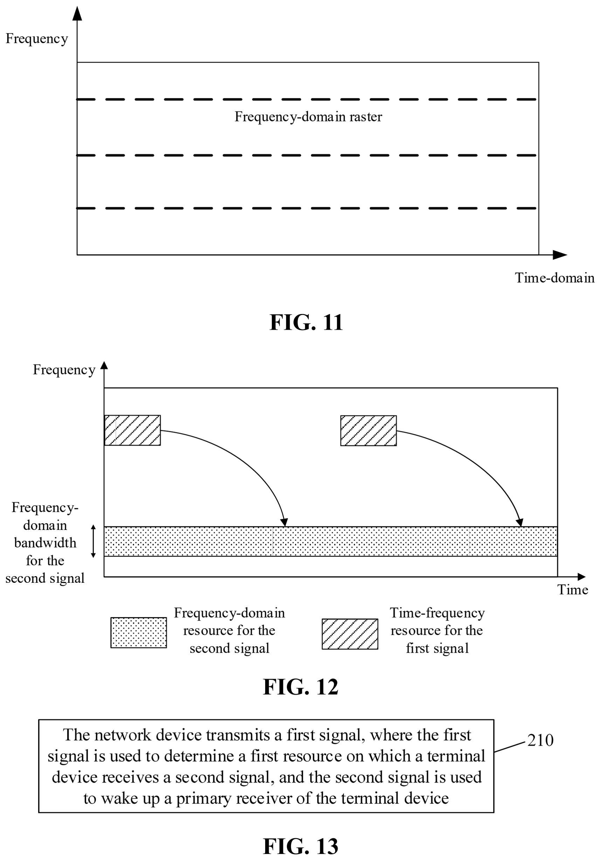

Optionally, with reference to FIG. 11, a set of frequency-domain rasters may be predefined within a frequency-domain bandwidth, and there may be certain frequency-domain spacing among the frequency-domain rasters. The frequency-domain resource position of the second resource has a correspondence relationship with the frequency-domain raster. For example, the frequency-domain position of the frequency-domain raster may be a center frequency of the second resource.

Optionally, in some embodiments, the specific resource set may be predefined in the protocol, and the network device may configure, through the high-level signaling or the physical layer signaling, a part of the resources in the specific resource set as the second resource for detecting the first signal.

In yet another possible implementation, the second resource may be determined by the terminal device based on the preset rule.

Optionally, the second resource may be determined based on a group to which the terminal device belongs. Different groups for terminal devices may correspond to different second resources.

It is to be understood that the main application scenario of the second signal may include waking up the primary receiver of the terminal device in a RRC idle/inactive state, to receive a paging message transmitted by the network device. In order to reduce the information carried in the second signal, the terminal devices may be typically grouped, and the different groups for the terminal devices may correspond to different reception resources for the second signal. As such, one second signal may only carry the wake up information for each of the terminal devices in the same group, to reduce the amount of information carried in the second signal.

Exemplarily, a group 1 for the terminal devices may include a UE 1 and a UE 2, and a group 2 for the terminal devices may include a UE 3 and a UE 4. Herein, the group 1 for the terminal devices may be associated with a first resource A, and the group 2 for the terminal devices may be associated with a first resource B. The UE1 and UE2 may receive the second signal on the first resource A, and the UE3 and UE4 may receive the second signal on the first resource B.

In the embodiments of the present disclosure, the terminal device may determine the first resource for receiving the second signal by searching for the first signal. In fact, the terminal device may search for the first signal on the second resource. Based on this, different second resources may be set to correspond to different groups for the terminal devices. The terminal device may search for the first signal on the second resource corresponding to the group to which the terminal device belongs, and further determine, based on the received first signal, the reception resource for the second signal that is associated with the current group. In such way, different first signals can correspond to different second resources, thus, different groups for the terminal devices can correspond to different positions of the reception resources for the second signals.

Exemplarily, the group 1 for the terminal devices may correspond to a second resource a, and the group 2 for the terminal devices may correspond to another second resource b. The UE1 and UE2 in the group 1 for the terminal devices may search for a first signal 1 on the second resource a, and the UE3 and UE4 in the group 2 for the terminal devices may search for a first signal 2 on the second resource b. The first signal 1 may be used to determine the first resource A, and the first signal 2 may be used to determine the first resource B. In such way, different groups for the terminal devices can correspond to different positions of the first resources for the second signal.

Based on this, the terminal device may determine the second resource for detecting the first signal based on the group to which the terminal device belongs. Moreover, the terminal device may detect the first signal on the determined second resource; and further determine the first resource for receiving the second signal based on the detected first signal.

It is to be noted that the group to which the terminal device belongs may be determined based on identification information of the terminal device, based on a type of the terminal device, or based on a capability of the terminal device, which is not limited in the embodiments of the present disclosure.

Optionally, the group to which the terminal device belongs may be determined based on identification information of the terminal device.

Herein, the identification information of the terminal device may be a UE ID, such as a Universally Unique Identifier (UUID), an International Mobile Equipment Identity (IMEI), and the like, which is not limited in the embodiments of the present disclosure.

It is to be understood that the terminal device may determine, based on identification information of the terminal device, the group to which the terminal device belongs. Further, the second resource may be determined based on the group to which the terminal device belongs. That is, the terminal device may determine, based on the identification information, the second resource for detecting the first signal.

Exemplarily, the second resource may be a part of resources in the specific resource set. The terminal device may perform a modulus calculation of the UE ID with respect to the total number of the resources in the specific resource set, and the obtained value may be the index value of the second resource in the specific resource set.

The following describes in detail the manner in which the terminal device determines the first resource according to the first signal.

In the embodiments of the present disclosure, the first resource for receiving the second signal may be determined based on a first mapping relationship, and the first mapping relationship may be used to represent a mapping relationship between the first signal and the first resource.

It is to be understood that there is a certain mapping relationship between the first signal and the first resource. After receiving the first signal, the terminal device may determine, based on the first mapping relationship, the first resource associated with the first signal.

Optionally, the first mapping relationship may be a mapping relationship between the transmission resource for the first signal and the first resource. That is, the first mapping relationship may be a mapping relationship between the second resource and the first resource. Herein, the first resource may be a sum of the transmission resource (i.e., the second resource) for the first signal and a resource offset.

Exemplarily, with reference to FIG. 12, the terminal device may detect the first signal on a frequency-domain resource F1 and a time-domain resource T1. Herein, the first mapping relationship may indicate a frequency-domain resource offset of -F0 and a time-domain resource offset of T0. Based on this, the terminal device may determine a frequency-domain position F2 = (F1-F0) and a time-domain position T2 = (T1+T0) of the first resource used for receiving the second signal.

Optionally, the first mapping relationship may be a mapping relationship between an index value of the first signal and the first resource. Different index values may correspond to different first resources.

Exemplarily, the first mapping relationship may indicate a mapping relationship between index values of multiple different first signals and multiple first resources. A first signal with an index value of 1 may be mapped to a first resource A, and a first signal with an index value of 2 may be mapped to a first resource B. According to the index value of the first signal that is received, the terminal device may obtain the corresponding position of the first resource

It is to be noted that the first mapping relationship may also be other types of mapping relationships, which is not limited in the embodiments of the present disclosure.

Optionally, the first mapping relationship may be predefined in the protocol and/or configured by the network.

Exemplarily, in a case where the first mapping relationship is the mapping relationship between the transmission resource for the first signal and the first resource, the resource offset may be a fixed value specified in the protocol or a value configured by the network device through signaling. In a case where the first mapping relationship indicates the mapping relationship between the index values of the multiple different first signals and the multiple first resources, the mapping relationship between the indexes of the first signals and the first resources may be predefined in the protocol or configured by the network device through signaling.

In another embodiment of the present disclosure, the first signal may carry indication information, and the indication information may be used to indicate the first resource.

It is to be understood that, according to the indication information for indicating the first resource carried in the first signal, the network device may directly indicate a specific position of the first resource used for receiving the second signal.

Optionally, the indication information may include one or more of the following: a frequency-domain resource, a time-domain resource, and a code-domain resource, which is not limited in the embodiments of the present disclosure.

Optionally, in a case where the first signal is a first discovery signal, a first index signal, a second discovery signal or a second index signal, the indication information may be carried in the first signal.

In summary, in the method for determining the resource provided by the embodiments of the present disclosure, the terminal device may determine the first resource for receiving the second signal based on the received first signal. In such way, the flexibility of resource configuration for the second signal can be improved, and the utilization rate of the wireless resources can also be improved. Moreover, according to the received first signal, the terminal device can directly determine the first resource for receiving the second signal without searching for the second signal, thereby reducing the complexity and time delay of the search performed by the terminal device.

Based on the same inventive concepts as the aforementioned embodiments, an embodiment of the present disclosure further provides a method for determining a resource, which is applied to a network device. With reference to FIG. 13, the method for determining the resource provided by the embodiment of the present disclosure includes an operation 210.

At block 210, the network device transmits a first signal, where the first signal is used to determine a first resource on which a terminal device receives a second signal, and the second signal is used to wake up a primary receiver of the terminal device.

In an embodiment of the present disclosure, the second signal may be a signal received by the terminal device through the secondary receiver (e.g., the wake up receiver in the above embodiments) with extremely low power consumption and low complexity. Additionally, the waveform used by the second signal may be convenient to be detected by the secondary receiver, such as, an ASK signal, FSK signal, OOK signal, PSK signal, etc.

Furthermore, from a functionality perspective, the second signal may be the signal that can be used to wake up the primary receiver of the terminal device, such as the WUS, an energy-saving signal, a paging signal, or the like. Herein, the WUS may be the same as or different from the energy-saving signal, which is not limited in the embodiments of the present disclosure.

In order to realize the flexible usage of the resources for the second signal, the network device may not fixedly configure the position of the first resource for the second signal to the terminal device, but configure the terminal device to determine the first resource for receiving the second signal by searching. In the embodiments of the present disclosure, the network device may transmit the first signal to the terminal device, to enable the terminal device to determine, according to the received first signal, the first resource for receiving the second signal.

Optionally, the network device may transmit the second signal to the terminal device on the first resource, and further wake up the primary receiver of the terminal device through the second signal.

It is to be understood that the network device may indicate, according to the actual usage of wireless resources, the resource for receiving the second signal to the terminal device through the first signal. Accordingly, the terminal device may receive the first signal and determine the first resource for receiving the second signal, to further receive the second signal. In such way, the network device can flexibly adjust the transmission resources for the second signal without allocating the fixed transmission resources for the second signal, thereby improving the flexibility of resource configuration for the second signal and further improving the utilization rate of the wireless resources. Moreover, according to the received first signal, the terminal device can directly determine the first resource for receiving the second signal without searching for the second signal, thereby reducing the complexity and time delay of the search performed by the terminal device.

Optionally, the first signal may be received through the primary receiver and/or the secondary receiver of the terminal device.

Optionally, the first signal may be a first type of signal or a second type of signal.

Herein, the first type of signal may be a signal received based on one or more of the following manners: envelope detection, amplitude detection, frequency detection, and phase detection. The second type of signal may be one or more of: an NR signal, an LTE wireless signal, and a WiFi signal.

Optionally, the first type of signal may be a WUR signal.

Optionally, the first type of signal may be received through the primary receiver and/or the secondary receiver, and the second type of signal may be received through the primary receiver.

Optionally, the first signal may include at least one of the following of the first type of signal:
a first synchronization signal, a first reference signal, a first preamble signal, a first beacon signal, a first discovery signal, or a first index signal.

Optionally, the first signal may include at least one of the following of the second type of signal:
a second synchronization signal, a second reference signal, a second preamble signal, a second beacon signal, a second discovery signal, or a second index signal.

Optionally, the network device may transmit the first signal to the terminal device on a second resource.

Optionally, the second resource may be determined based on one or more of the following: a preset rule, a network configuration, and a protocol predefinition.

Optionally, in a case where the second resource is determined based on the preset rule,
the second resource may be determined based on a group to which the terminal device belongs, and different groups for terminal devices correspond to different second resources.

Optionally, the group to which the terminal device belongs may be determined based on identification information of the terminal device.

Optionally, the first resource may be determined based on a first mapping relationship, and the first mapping relationship may be used to represent a mapping relationship between the first signal and the first resource.

Optionally, the first mapping relationship may be predefined in the protocol and/or configured by the network.

Optionally, the first signal may carry indication information, and the indication information may be used to indicate the first resource.

Those skilled in the art will appreciate that the related descriptions of the method for determining the resource in the embodiments of the present disclosure may be understood with reference to the descriptions of the method for determining the resource in the aforementioned embodiments of the present disclosure.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It should be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

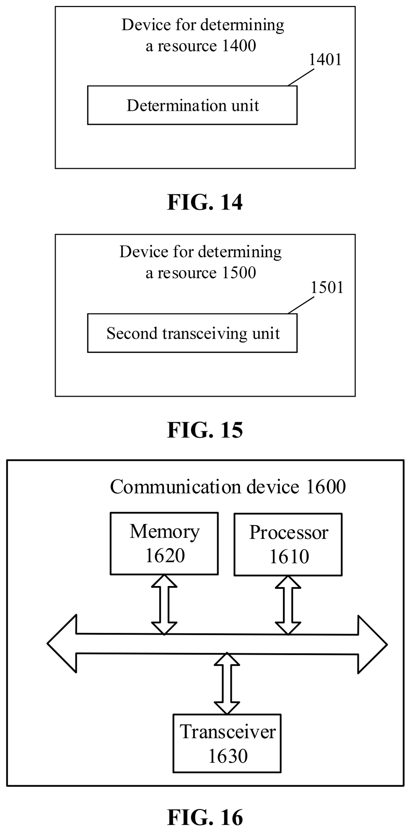

FIG. 14 is a schematic structural diagram of a device for determining a resource 1400 according to an embodiment of the present disclosure. The device for determining the resource 1400 is applied to a terminal device. As shown in FIG. 14, the device for determining the resource includes a determination unit 1401.

The determination unit 1401 is configured to determine a first resource based on a received first signal. Here, the first resource is used to receive a second signal, and the second signal is used to wake up a primary receiver of the terminal device.

Optionally, the device for determining the resource 1400 may further include a first transceiving unit, and the first transceiving unit may include a primary receiver and a secondary receiver. The first transceiving unit may be configured to receive the first signal through the primary receiver and/or the secondary receiver.

Optionally, the first signal may be a first type of signal or a second type of signal.

Herein, the first type of signal may be a signal received based on one or more of the following manners: envelope detection, amplitude detection, frequency detection, and phase detection. The second type of signal may be one or more of: an NR signal, an LTE wireless signal, and a WiFi signal.

Optionally, the first type of signal may be a WUR signal.

Optionally, the first type of signal may be received through the primary receiver and/or secondary receiver; and the second type of signal may be received through the primary receiver.

Optionally, the first signal may include at least one of the following of the first type of signal:
a first synchronization signal, a first reference signal, a first preamble signal, a first beacon signal, a first discovery signal, or a first index signal.

Optionally, the first signal may include at least one of the following of the second type of signal:a second synchronization signal, a second reference signal, a second preamble signal, a second beacon signal, a second discovery signal, or a second index signal.

Optionally, the terminal device may receive the first signal on a second resource.

Optionally, the second resource may be determined based on one or more of the following:
a preset rule, a network configuration, and a protocol predefinition.

Optionally, the second resource may be determined based on a group to which the terminal device belongs. Different groups for terminal devices may correspond to different second resources.

Optionally, the group to which the terminal device belongs may be determined based on identification information of the terminal device.

Optionally, the first resource may be determined based on a first mapping relationship, and the first mapping relationship may be used to represent a mapping relationship between the first signal and the first resource.

Optionally, the first mapping relationship may be predefined in a protocol and/or configured by a network.

Optionally, the first signal may carry indication information, and the indication information may be used to indicate the first resource.

Optionally, the first transceiving unit may be configured to receive the second signal on the first resource through the secondary receiver.

Those skilled in the art will appreciate that the related descriptions of the device for determining the resource in the embodiments of the present disclosure may be understood with reference to the descriptions of the method for determining the resource in the embodiments of the present disclosure.

FIG. 15 is a schematic structural diagram of a device for determining a resource 1500 according to an embodiment of the present disclosure. The device for determining the resource 1500 is applied to a network device. As shown in FIG. 15, the device for determining the resource 1500 includes a second transceiving unit 1501.

The second transceiving unit 1501 is configured to transmit a first signal, where the first signal is used to determine a first resource on which a terminal device receives a second signal, and the second signal is used to wake up a primary receiver of the terminal device.

Optionally, the first signal may be received through the primary receiver and/or a secondary receiver of the terminal device.

Optionally, the first signal may be a first type of signal or a second type of signal.

Herein, the first type of signal may be a signal received based on one or more of the following manners: envelope detection, amplitude detection, frequency detection, and phase detection.

The second type of signal may be one or more of: an NR signal, an LTE wireless signal, and a WiFi signal.

Optionally, the first type of signal may be a WUR signal.

Optionally, the first type of signal may be received through the primary receiver and/or the secondary receiver, and the second type of signal may be received through the primary receiver.

Optionally, the first signal may include at least one of the following of the first type of signal:
a first synchronization signal, a first reference signal, a first preamble signal, a first beacon signal, a first discovery signal, or a first index signal.

Optionally, the first signal may include at least one of the following of the second type of signal:
a second synchronization signal, a second reference signal, a second preamble signal, a second beacon signal, a second discovery signal, or a second index signal.

Optionally, the second transceiving unit 1501 may be configured to transmit the first signal to the terminal device on a second resource.

Optionally, the second resource may be determined based on one or more of the following:
a preset rule, a network configuration, and a protocol predefinition.

Optionally, the second resource may be determined based on a group to which the terminal device belongs. Different groups for terminal devices may correspond to different second resources.

Optionally, the group to which the terminal device belongs may be determined based on identification information of the terminal device.

Optionally, the first resource may be determined based on a first mapping relationship, and the first mapping relationship may be used to represent a mapping relationship between the first signal and the first resource.

Optionally, the first mapping relationship may be predefined in a protocol and/or configured by a network.

Optionally, the first signal may carry indication information, and the indication information may be used to indicate the first resource.

Optionally, the second transceiving unit 1501 may be further configured to transmit the second signal on the first resource.

It should be understood by those skilled in the art that the relevant descriptions of the above device for determining the resource in the embodiments of the present disclosure may be understood with reference to relevant descriptions of the method for determining the resource in the embodiments of the present disclosure.

FIG. 16 is a schematic structural diagram of a communication device 1600 according to an embodiment of the present disclosure. The communication device may be a terminal device or a network device. The communication device 1600 illustrated in FIG. 16 includes a processor 1610. The processor 1610 may be configured to call and run a computer program stored in a memory to perform each of the methods according to the embodiments of the present disclosure.

Optionally, as illustrated in FIG. 16, the communication device 1600 may further include a memory 1620. Herein, the processor 1610 may be configured to call and run the computer program stored in the memory 1620 to perform each of the methods according to the embodiments of the present disclosure.

Herein, the memory 1620 may be a separate device independent of the processor 1610, or may be integrated into the processor 1610.

Optionally, as illustrated in FIG. 16, the communication device 1600 may further include a transceiver 1630. The processor 1610 may control the transceiver 1630 to communicate with other devices. Specifically, the transceiver 1630 may transmit information or data to other devices, or receive information or data from other devices.

Herein, the transceiver 1630 may include a transmitter and a receiver. The transceiver 1630 may further include one or more antennas.

Optionally, the communication device 1600 may specifically be the network device in the embodiments of the present disclosure. The communication device 1600 may implement corresponding processes that are implemented by the network device in each of the methods in the embodiments of the present disclosure. For brevity, details are not elaborated herein again.

Optionally, the communication device 1600 may specifically be the mobile terminal/terminal device in the embodiments of the present disclosure. The communication device 1600 may implement corresponding processes that are implemented by the mobile terminal/terminal device in each of the methods in the embodiments of the present disclosure. For brevity, details are not elaborated herein again.

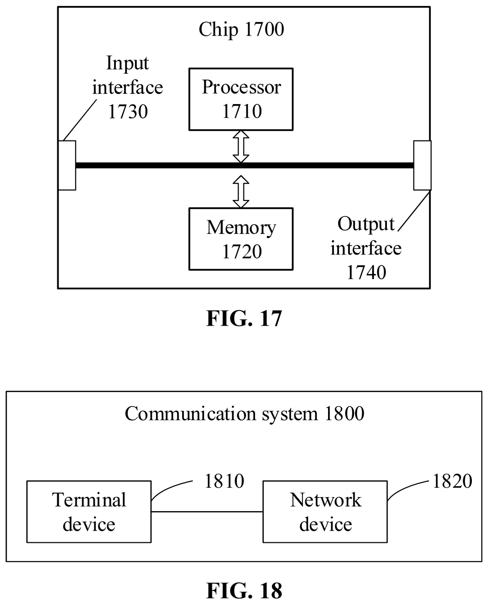

FIG. 17 is a schematic structural diagram of a chip provided in an embodiment of the present disclosure. The chip 1700 illustrated in FIG. 17 includes a processor 1710. The processor 1710 may be configured to call and run a computer program stored in a memory to perform each of the methods according to the embodiments of the present disclosure.

Optionally, as illustrated in FIG. 17, the chip 1700 may further include a memory 1720. Herein, the processor 1710 may be configured to call and run the computer program stored in the memory 1720 to perform each of the methods according to the embodiments of the present disclosure.

Herein, the memory 1720 may be a separate device independent of the processor 1710, or may be integrated into the processor 1710.

Optionally, the chip 1700 may further include an input interface 1730. Herein, the processor 1710 may control the input interface 1730 to communicate with other devices or chips. Specifically, the input interface 1730 may obtain information or data from other devices or chips.

Optionally, the chip 1700 may further include an output interface 1740. Herein, the processor 1710 may control the output interface 1740 to communicate with other devices or chips. Specifically, the output interface 1740 may output information or data to other devices or chips.

Optionally, the chip may be applied to the network device in the embodiments of the present disclosure. The chip may implement the corresponding processes implemented by the network device in each of the methods in the embodiments of the present disclosure. For brevity, details are not elaborated herein again.

Optionally, the chip may be applied to the mobile terminal/terminal device in the embodiments of the present disclosure. The chip may implement the corresponding processes implemented by the mobile terminal/terminal device in each of the methods in the embodiments of the present disclosure. For brevity, details are not described herein again.

It should be understood that, the chip referred to in the embodiments of the present disclosure may also be referred to as a system-level chip, a system chip, a chip system, or a system-on-chip, etc.

FIG. 18 is a schematic block diagram of a communication system 1800 according to an embodiment of the present disclosure. As illustrated in FIG. 18, the communication system 1800 includes a terminal device 1810 and a network device 1820.

Herein, the terminal device 1810 may be configured to implement the corresponding functions implemented by the terminal device in the foregoing methods. The network device 1820 may be configured to implement the corresponding functions implemented by the network device in the foregoing methods. For brevity, details are not elaborated herein again.

It should be understood that the processor in the embodiments of the present disclosure may be an integrated circuit chip having a signal processing capability. During an implementation process, various operations in the aforementioned method embodiments may be implemented by using an integrated logic circuit in a hardware form in the processor or implemented by using instructions in a software form. The foregoing processor may be a general-purpose processor, a digital signal processor (DSP), an application-specific integrated circuit (ASIC), a field programmable gate array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the method disclosed in the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register a register, or the like. The storage medium is located in the memory, and the processor reads information in the memory to complete the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include, but not be limited to, memories of these and any other suitable types.

It should be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is, the memory in the embodiments of the present disclosure is intended to include, but not be limited to, memories of these and any other suitable types.

An embodiment of the present disclosure further provides a computer-readable storage medium configured to store a computer program.

Optionally, the computer-readable storage medium may be applied to the network device in the embodiments of the present disclosure, and the computer program causes a computer to perform the corresponding processes performed by the network device in various methods of the embodiments of the present disclosure. For brevity, details are not elaborated herein again.

Optionally, the computer-readable storage medium may be applied to the mobile terminal/terminal device in the embodiments of the present disclosure, and the computer program causes a computer to perform the corresponding processes performed by the mobile terminal/terminal device in various methods of the embodiments of the present disclosure. For brevity, details are not described herein again.

An embodiment of the present disclosure further provides a computer program product, which includes computer program instructions.

Optionally, the computer program product may be applied to the network device in the embodiments of the present disclosure, and the computer program instructions cause a computer to perform the corresponding processes performed by the network device in various methods of the embodiments of the present disclosure. For brevity, details are not elaborated herein again.

Optionally, the computer program product may be applied to the mobile terminal/terminal device in the embodiments of the present disclosure, and the computer program instructions cause a computer to perform the corresponding processes performed by the mobile terminal/terminal device in various methods of the embodiments of the present disclosure. For brevity, details are not described herein again.

An embodiment of the present disclosure further provides a computer program.

Optionally, the computer program may be applied to the network device in the embodiments of the present disclosure, and the computer program, when is run on a computer, causes the computer to perform the corresponding processes performed by the network device in various methods of the embodiments of the present disclosure. For brevity, details are not elaborated herein again.

Optionally, the computer program may be applied to the mobile terminal/terminal device in the embodiments of the present disclosure, and the computer program, when is run on a computer, causes the computer to perform the corresponding processes performed by the mobile terminal/terminal device in various methods of the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the systems, apparatuses and units described above, reference may be made to the corresponding processes in the aforementioned method embodiments, and such specific working processes of the systems, devices and units are not described herein again for the purpose of convenient and brief description,.

In some embodiments provided in the present disclosure, it should be understood that the disclosed systems, apparatuses and methods may be implemented in other manners. For example, the apparatus embodiments described above are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the solutions of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for determining a resource, comprising:
determining, by a terminal device, a first resource based on a received first signal, wherein the first resource is used to receive a second signal, and the second signal is used to wake up a primary receiver of the terminal device.

2. The method of claim 1, further comprising:
receiving, by the terminal device, the first signal through the primary receiver and/or a secondary receiver.

3. The method of claim 1 or 2, wherein the first signal is a first type of signal or a second type of signal;
wherein the first type of signal is a signal received based on one or more of the following manners: envelope detection, amplitude detection, frequency detection, and phase detection; and
the second type of signal is one or more of: a New Radio (NR) signal, a Long Term Evolution (LTE) wireless signal, and a Wireless Fidelity (WiFi) signal.

4. The method of claim 3, wherein the first type of signal is a Wake Up Radio (WUR) signal.

5. The method of claim 3 or 4, wherein the first type of signal is received through the primary receiver and/or a secondary receiver, and the second type of signal is received through the primary receiver.

6. The method of any one of claims 3 to 5, wherein the first signal comprises at least one of the following of the first type of signal:
a first synchronization signal, a first reference signal, a first preamble signal, a first beacon signal, a first discovery signal, or a first index signal.

7. The method of any one of claims 3 to 6, wherein the first signal comprises at least one of the following of the second type of signal:
a second synchronization signal, a second reference signal, a second preamble signal, a second beacon signal, a second discovery signal, or a second index signal.

8. The method of any one of claims 1 to 7, further comprising:
detecting, by the terminal device, the first signal on a second resource.

9. The method of claim 8, wherein the second resource is determined based on one or more of the following:
a preset rule, a network configuration, and a protocol predefinition.

10. The method of claim 9, wherein in a case where the second resource is determined based on the preset rule, the second resource is determined based on a group to which the terminal device belongs, and different groups for terminal devices correspond to different second resources.

11. The method of claim 10, wherein the group to which the terminal device belongs is determined based on identification information of the terminal device.

12. The method of any one of claims 1 to 11, wherein
the first resource is determined based on a first mapping relationship, and the first mapping relationship is used to represent a mapping relationship between the first signal and the first resource.

13. The method of claim 12, wherein the first mapping relationship is predefined in a protocol and/or configured by a network.

14. The method of any one of claims 1 to 11, wherein
the first signal carries indication information, and the indication information is used to indicate the first resource.

15. The method of any one of claims 1 to 14, wherein, after determining, by the terminal device, the first resource based on the received first signal, the method further comprises:
receiving, by the terminal device, the second signal on the first resource through a secondary receiver.

16. A method for determining a resource, comprising:
transmitting, by a network device, a first signal, wherein the first signal is used to determine a first resource on which a terminal device receives a second signal, and the second signal is used to wake up a primary receiver of the terminal device.

17. The method of claim 16, wherein the first signal is received through the primary receiver and/or a secondary receiver of the terminal device.

18. The method of claim 16 or 17, wherein the first signal is a first type of signal or a second type of signal;
wherein the first type of signal is a signal received based on one or more of the following manners: envelope detection, amplitude detection, frequency detection, and phase detection; and
the second type of signal is one or more of: a New Radio (NR) signal, a Long Term Evolution (LTE) wireless signal, and a Wireless Fidelity (WiFi) signal.

19. The method of claim 18, wherein the first type of signal is a Wake Up Radio (WUR) signal.

20. The method of claim 18 or 19, wherein the first type of signal is received through the primary receiver and/or a secondary receiver, and the second type of signal is received through the primary receiver.

21. The method of any one of claims 18 to 20, wherein the first signal comprises at least one of the following of the first type of signal:
a first synchronization signal, a first reference signal, a first preamble signal, a first beacon signal, a first discovery signal, or a first index signal.

22. The method of any one of claims 18 to 21, wherein the first signal comprises at least one of the following of the second type of signal:
a second synchronization signal, a second reference signal, a second preamble signal, a second beacon signal, a second discovery signal, or a second index signal.

23. The method of any one of claims 16 to 22, wherein transmitting, by the network device, the first signal comprises:
transmitting, by the network device, the first signal to the terminal device on a second resource.

24. The method of claim 23, wherein the second resource is determined based on one or more of the following:
a preset rule, a network configuration, and a protocol predefinition.

25. The method of claim 23, wherein in a case where the second resource is determined based on the preset rule, the second resource is determined based on a group to which the terminal device belongs, and different groups for terminal devices correspond to different second resources.

26. The method of claim 25, wherein the group to which the terminal device belongs is determined based on identification information of the terminal device.

27. The method of any one of claims 16 to 26, wherein
the first resource is determined based on a first mapping relationship, and the first mapping relationship is used to represent a mapping relationship between the first signal and the first resource.

28. The method of claim 27, wherein the first mapping relationship is predefined in a protocol and/or configured by a network.

29. The method of any one of claims 16 to 28, wherein
the first signal carries indication information, and the indication information is used to indicate the first resource.

30. The method of any one of claims 16 to 29, further comprising:
transmitting, by the network device, the second signal on the first resource.

31. A device for determining a resource, applied to a terminal device, the device comprising:
a determination unit, configured to determine a first resource based on a received first signal, wherein the first resource is used to receive a second signal, and the second signal is used to wake up a primary receiver of the terminal device.

32. A device for determining a resource, applied to a network device, the device comprising:
a second transceiving unit, configured to transmit a first signal, wherein the first signal is used to determine a first resource on which a terminal device receives a second signal, and the second signal is used to wake up a primary receiver of the terminal device.

33. A terminal device comprising: a processor and a memory, wherein the memory is configured to store a computer program, and the processor is configured to call and run the computer program stored in the memory to perform the method of any one of claims 1 to 15.

34. A network device comprising: a processor and a memory, wherein the memory is configured to store a computer program, and the processor is configured to call and run the computer program stored in the memory to perform the method of any one of claims 16 to 30.

35. A chip comprising: a processor configured to call and run a computer program from a memory, to enable a device on which the chip is mounted to perform the method of any one of claims 1 to 15, or to perform the method of any one of claims 16 to 30.

36. A computer storage medium configured to store a computer program, wherein the computer program causes a terminal device to perform the method of any one of claims 1 to 15, or causes a network device to perform the method of any one of claims 16 to 30.

37. A computer program product, comprising computer program instructions, wherein the computer program instructions cause a terminal device to perform the method of any one of claims 1 to 15, or cause a network device to perform the method of any one of claims 16 to 30.

38. A computer program, wherein the computer program causes a terminal device to perform the method of any one of claims 1 to 15, or causes a network device to perform the method of any one of claims 16 to 30.
